# EUROPEAN PATENT APPLICATION

(11) **EP 1 271 538 A1**
(43) Date of publication of application: **02.01.2003**
(21) Application number: 01115238.6
(22) Date of filing: 22.06.2001
(51) Int. Cl.: G11B 33/04

(54) **Compact disk case structure**

(71) Applicant: Ritek Corporation, Hsinchu Hsien (TW)
(72) Inventor: Kuo, Hsien-Tse, East District, Hsin Chu City (TW)
(74) Representative: Schnekenbühl, Robert Matthias L.

(57) **Abstract**

The present invention proposes a CD case structure formed by joining a bottom cover and a top cover. The bottom cover has a bottom plate. A side bar is formed at each of the front and rear sides of the bottom plate near the periphery thereof. The side bars are symmetrically arranged with an access opening at the center thereof. The bottom plate has a right side plate and a left side plate. The right side plate has a groove at the center thereof. The top surface of the bottom plate has a raised arc bar matched with the outer diameter of a CD. A raised ring is formed at the position near the disk aperture of the CD. A raised retaining ring is formed at the disk aperture of the CD to position the CD.

## Description

### FIELD OF THE INVENTION

The present invention relates to a compact disk (CD) case structure and, more particularly, to an ultra-thin form of a CD case structure.

### BACKGROUND OF THE INVENTION

In present digital age, because computers need large quantities of data to be fed in, CD-ROM drives become indispensable equipments. Because CDs are media for storing important data such as packaged software or audio/video data, they need storing space for protection. The most commonly used way is to place a CD in a CD case.

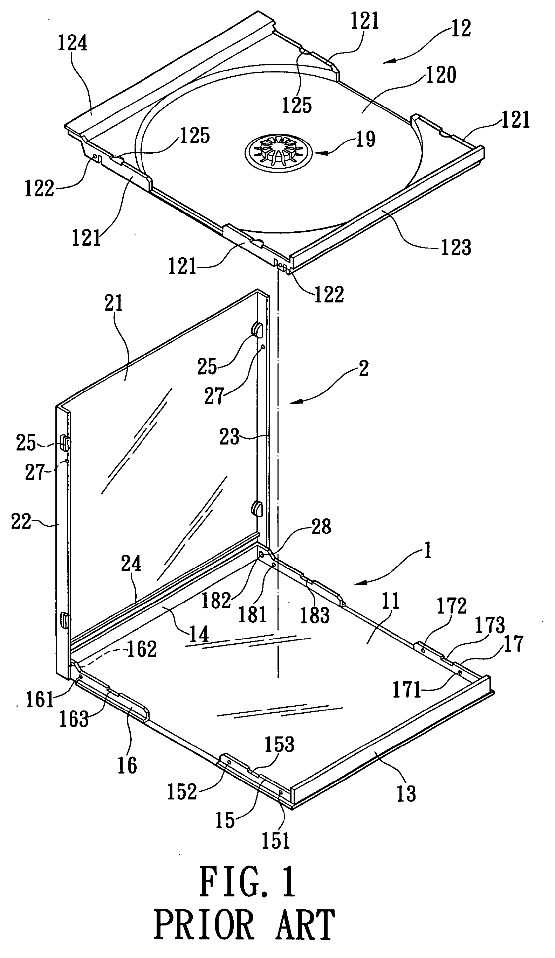

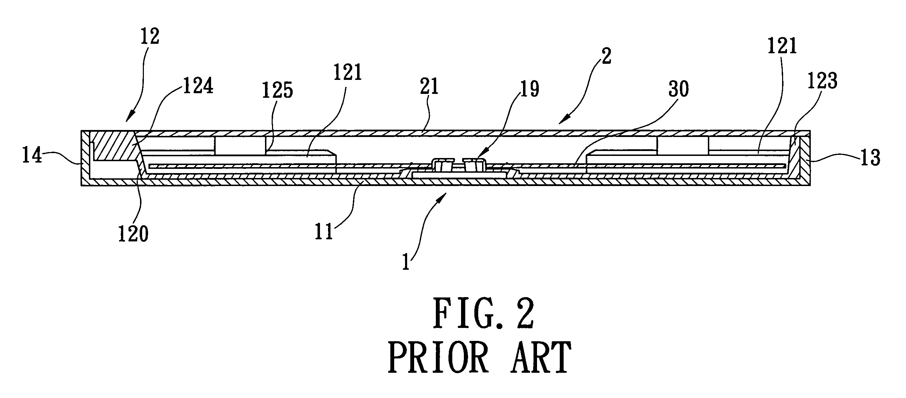

As shown in Figs. 1 and 2, a most commonly used CD case in prior art comprises an upper cover 2, a lower cover 1, and a middle plate 12. In this single-disk structure, the middle plate 12 is mainly used as a joining element with the lower cover 1, and is also used as a joining element with a CD. The lower cover 1 has a lower plate 11, which has a right plate 13, a left plate 14, a front right plate 15, a front left plate 16, a rear right plate 17, and a rear left plate 18 on its periphery. The front left plate 16 has a positioning hole 161 and a pivotal hole 162. The rear left plate 18 has a positioning hole 181 and a pivotal hole 182. The front right plate 15 has a positioning hole 151 and a retaining groove 152. The rear right plate 17 has a positioning hole 171 and a retaining groove 172.

The middle plate 12 has a recessed circular groove 120 and a retaining structure 19 at its center. The retaining structure 19 joins the central hole of a CD exactly received in the circular groove 120. Each of the front and rear side planes of the middle plate 12 has two side plates 121 extending downwards. Each side plate 121 has a raised retainer 122. The raised retainers 122 are retained in the positioning holes 151, 161, 171, and 181. The right side of the middle plate 12 is an upward right side plate 123, and the left side thereof is a left positioning plate 124 extending upwards and then leftwards. The outer end of the left positioning plate 124 joins the upper surface of the left plate 14. The right side plate 123 joins the inner surface of the right plate 13.

The upper cover 2 has an upper plate 21 having a front plate 22, a rear plate 23, and a left end depressing bar 24. The positions near each end of the front plate 22 and the rear plate 23 respectively have semicircular plates 24 and 25. The semicircular plates 24 and 25 respectively pass through a left front groove 153, a right front groove 163, a left rear groove 173, and a right rear groove 183 of the lower cover 1 and are then retained in corresponding semicircular grooves 125 of the middle plate 2. The front plate 22 and the rear plate 23 have pivotal posts 26 at one end thereof, respectively. The pivotal posts 26 join the pivotal holes 162 and 182 of the middle plate 12. The front plate 22 and the rear plate 23 are fixed in the retaining grooves 152 and 172 of the lower cover 1 through retaining points 27 on the inner surfaces thereof. The upper cover 2 can be turned 180 degrees with respect to the lower cover 1.

The structure shown in Fig. 1 is also disclosed in U.S. Pat. No. 5660274, which proposes an improved tray having a central circular bottom plate (not shown) joined with even number of retainer tabs to generate retaining and retractile effect of the retainer tabs to the disk aperture of a compact disk. This is different from the above prior art in structure, and is also different from the present invention.

There is another structure of CD case capable of receiving two CDs. This structure has a different retaining structure of the middle plate so that a CD can be retained on each surface of the middle plate. The front left plate and the rear left plate of the lower cover are pivotally joined with the middle plate so that the middle plate can be turned to facilitate the use of two CDs. However, this structure has the drawbacks of large thickness and large count of components. Moreover, much time is required for assembly.

In the above CD case structure for receiving a single CD, two to three CDs can be received in the thickness space thereof. Therefore, much space is wasted.

### SUMMARY OF THE INVENTION

One object of the present invention is to provide a CD case structure, which is a two-cover structure having only a top cover and a bottom cover to receive a single CD. The present invention has an ultra-thin thickness, about a half of that of a prior art CD case. Therefore, the occupied space can be reduced to a half, doubling the count of the CD cases placed in a certain storing space. Moreover, the present invention has the advantages of convenient grip, easy fabrication, and convenient assembly.

Another object of the present invention is to provide a CD case structure having an easy pull end. The top cover and the bottom plane of the bottom cover have a straight groove. The CD case can be pulled out with the left side plate of the top cover retained by fingers. A structure convenient to be retained by fingers is also provided at this position.

To achieve the above objects, the CD case structure of present invention comprises a bottom cover and a top cover. The bottom cover has a bottom plate. A side bar is formed at each of the front and rear sides of the bottom plate near the periphery thereof. The side bars are symmetrically arranged with an access opening at the center thereof. The bottom plate has a right side plate and a left side plate. The right side plate has a groove. The top surface of the bottom plate has a raised arc bar matched with the outer diameter of a CD. The raised arc bar is divided into four sections. A raised ring is formed at the position near the disk aperture of the CD. A raised retaining ring is formed at the disk aperture of the CD. The retaining ring is divided into at least three parts, each having an arc plate and an arc retainer. The retaining ring is used to position the CD. Each of the front and rear side bars extends from the left side plate to form a projective plate. A projective shaft is formed opposed to each of the projective plates. The top cover has a top plate. The top plate has a left side plate, a front side plate, and a rear side plate. A gap is formed on the top plate near the left side plate. The gap joins a pivotal plate having a pivotal hole so as to be joined with the projective shaft. Each of the front and rear side plates of the top plate has a recess to be retained with a raised point of each of the front and rear side bars of the bottom plate. A concave part is formed at each end of the left side plate of the top plate. A raised part is formed at each side of the left side plate of the bottom plate. A depressing bar is formed on the top plate near the left side plate.

The various objects and advantages of the present invention will be more readily understood from the following detailed description when read in conjunction with the appended drawings, in which:

### BRIEF DESCRIPTION OF THE DRAWINGS:

Fig. 1 is an exploded perspective view of a prior art CD case;
Fig. 2 is a cross-sectional view of a prior art CD case;
Fig. 3 is a perspective view of an opened CD case of the present invention;
Fig. 3A is an enlarged view of the A part shown in Fig. 3;
Fig. 4 is a perspective view of a closed CD case of the present invention;
Fig. 5 is a cross-sectional view of a CD case of the present invention along the line 5-5 shown in Fig. 4; and
Fig. 6 is a partly enlarged view of a side corner of a CD case of the present invention when the top cover is opened 90 degrees with respect to the bottom cover.

### DETAILED DESCRIPTION OF THE PREFERRED EMBODIMENTS

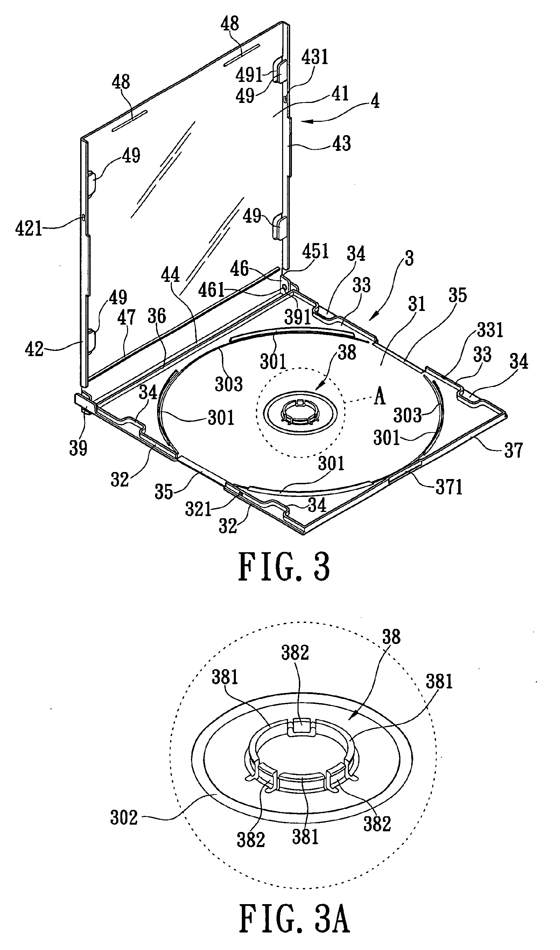

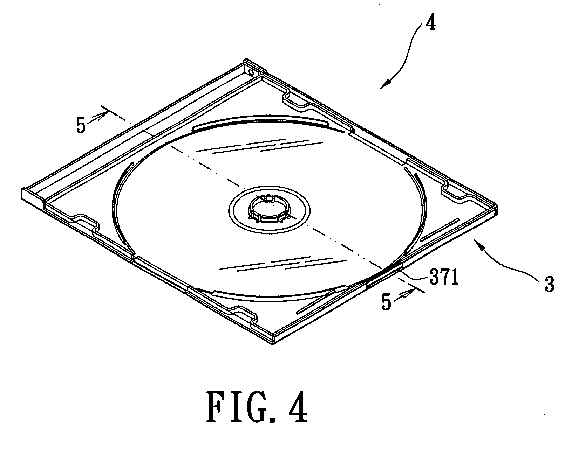

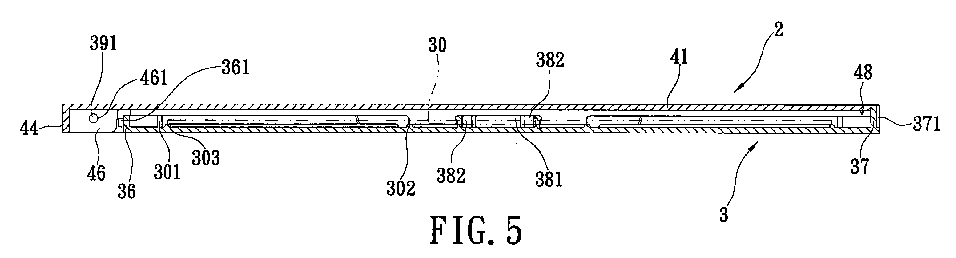

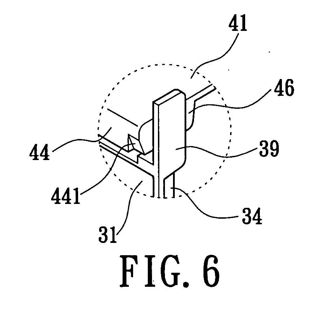

As shown in Figs. 3 to 6, the CD case structure of present invention comprises a bottom cover 3 and a top cover 4. The bottom cover 3 has a bottom plate 31. The front and rear sides of the bottom plate near the periphery thereof have a front side bar 32 and a rear side bar 33, respectively. The side bars 32 and 33 are symmetrically arranged at the front and rear sides.

As shown in the figures, the side bars 32 and 33 at the same side are divided into two sections with a concave part 34 formed in between. The center of each of the side bars 32 and 33 is disconnected, and is used as an access opening 35. The bottom plate 31 has a left side plate 36 and a right side plate 37. The right side plate 37 has a groove 371 at the center thereof.

The top surface of the bottom plate 31 has a raised arc bar 301 matched with the outer diameter of a CD 30. The raised arc bar 301 is divided into four sections. A raised annular bar 303 is formed inside the raised arc bar 301. A raised ring 302 is formed at the position near the disk aperture of the CD 30. A raised retaining ring 38 is formed at the disk aperture of the CD 30. The retaining ring 38 is divided into at least three parts, each having an arc plate 381 and an arc retainer 382. The arc retainers 382 are used to position the CD 30. Each of the front and rear side bars 32 and 33 extends from the left side plate 36 to form a projective plate 39. A projective shaft 391 is formed opposed to each pf the projective plates 39.

The top cover 4 has a top plate 41. The top plate 41 has a left side plate 44, a front side plate 42, and a rear side plate 43. Gaps 45 are formed at the front and rear sides of the top plate 41 near the left side plate 44. The gap 45 joins a pivotal plate 46 having a pivotal hole 461 so as to be joined with the projective shaft 391. The front and rear side plates 42 and 43 of the top plate 41 have recesses 421 and 431 to be retained with raised points 321 and 331 of the front and rear side bars 32 and 33 of the bottom plate 31, respectively. A concave part 441 is formed at each end of the left side plate 44 of the top plate 41. A raised part 361 is formed at each side of the left side plate 36 of the bottom plate 31. When the top cover 4 is opened 180 degrees with respect to the bottom cover 3, the concave part 441 is positioned with the raised part 361 so that the two covers can only be opened to this extent maximally.

A depressing bar 47 is formed on the top plate 41 near the left side plate 44. A pair of short depressing bars 48 are formed on the top plate 41 near the right side thereof. A transverse projective plate 49 is formed at each side of the front and rear side plates 42 and 43 to be positioned in the concave parts 34 of the bottom plate 31. An indentation 491 is formed opposed to each of the transverse projective plates 49 on the top plate 41.

To sum up, the present invention exploits a simplified structure to form a thin CD case comprising only a top cover and a bottom cover. The whole structure is compact. Moreover, the left side plate 44 of the top cover can facilitate the pull action to provide good convenience in use.

Although the present invention has been described with reference to the preferred embodiments thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A compact disk case structure comprising:
a bottom cover having a bottom plate, a front side bar, a rear side bar, a left side plate, and a right side plate, said front and rear side bars being symmetrically arranged at two sides with an access opening at the center thereof, said right side plate having a groove, the top surface of said bottom plate having a plurality of raised arc bars, a raised ring being formed inside said raised arc bars, a retaining ring being formed inside said raised ring, said retaining ring being used to position a compact disk, each of said front and said rear side bars extending from said left side plate to form a projective plate, a projective shaft being formed opposed to each of said projective plate, each of said front and said rear side bars having a raised point; and
a top cover having a top plate, a left side plate, a front side plate, and a rear side plate, a gap being formed on said top plate near said left side plate, said gap joining a pivotal plate which has a pivotal hole, said pivotal hole joining said projective shaft of said bottom cover, a recess being formed on each of said front and said rear side plates of said top plate, said recesses being retained with said raised points of said bottom cover.

2. The compact disk case structure as claimed in claim 1, wherein a raised part is formed at each end of said left side plate of said bottom cover, and a concave part is formed at each side of said left side plate of said top cover.

3. The compact disk case structure as claimed in claim 1, wherein said retaining ring of said bottom cover is divided into at least three parts, each having an arc plate and an arc retainer, said arc retainers being used to position a compact disk.

4. The compact disk case structure as claimed in claim 1, wherein a depressing bar is formed on said top cover near said left side plate.
